# FASCICULE DE BREVET EUROPEEN

(11) **EP 3 369 067 B1**
(45) Date de publication et mention de la délivrance du brevet: **25.11.2020**
(21) Numéro de dépôt: 16785165.8
(22) Date de dépôt: 21.10.2016
(51) Int. Cl.: G06Q 30/02, G06Q 20/20, G06Q 20/32, H04W 4/00

(54) **PROCÉDÉ DE TRAITEMENT DE DONNÉES SUR BORNE MULTIMÉDIA DE PAIEMENT, DISPOSITIFS ET PROGRAMMES D'ORDINATEUR CORRESPONDANTS**
VERFAHREN ZUR VERARBEITUNG VON DATEN AUF EINEM MULTIMEDIA-ZAHLUNGSTERMINAL, ENTSPRECHENDE VORRICHTUNGEN UND COMPUTERPROGRAMME
METHOD FOR PROCESSING DATA ON A MULTIMEDIA PAYMENT TERMINAL, CORRESPONDING DEVICES AND COMPUTER PROGRAMS

(30) Priorité: 27.10.2015 FR 1560271
(43) Date de publication de la demande: 05.09.2018
(73) Titulaire: Ingenico Group, 75015 Paris (FR)
(72) Inventeur: GERAUD, Rémi, 92160 Antony (FR); NACCACHE, David, 75018 Paris (FR); DUCROHET, Vincent, 78120 Saint-Cyr-l'Ecole (FR); QUENTIN, Pierre, 95880 Enghien-les-Bains (FR); DELORD, Christian, 92210 Saint-Cloud (FR)
(74) Mandataire: Vidon Brevets & Stratégie
(86) Numéro de dépôt international: PCT/EP2016/075476
(87) Numéro de publication internationale: WO 2017/072056

(56) Documents cités:
- JP-A- 2011 203 952
- US-A1- 2011 144 801
- US-A1- 2013 054 016
- US-A1- 2015 248 702
- Tim Hornyak: "Vending machine watches you, offers drink advice - CNET", CNET, 8 octobre 2010 (2010-10-08), XP055294690, Extrait de l'Internet: URL:http://www.cnet.com/news/vending-machi ne-watches-you-offers-drink-advice/ [extrait le 2016-08-10]
- KIRAN S. KADAMBI ET AL: "Near-field communication-based secure mobile payment service", PROCEEDINGS OF THE 11TH INTERNATIONAL CONFERENCE ON ELECTRONIC COMMERCE, ICEC '09, 1 janvier 2009 (2009-01-01), page 142, XP055052573, New York, New York, USA DOI: 10.1145/1593254.1593276 ISBN: 978-1-60-558586-4
- Nemanja Memarovic ET AL: "Beyond Web 2.0: Challenges in Personalizing for Networked Public Display Environments", Pervasive 2010 Workshop, 17 mai 2010 (2010-05-17), XP055294573, Extrait de l'Internet: URL:http://citeseerx.ist.psu.edu/viewdoc/d ownload?doi=10.1.1.708.429&rep=rep1&type=p df [extrait le 2016-08-09]
- Tom Kaneshige: "Proximity-Based Advertising Closer Than You Think | CIO", CIO, 22 janvier 2015 (2015-01-22), XP055294489, Extrait de l'Internet: URL:http://www.cio.com/article/2873606/adv ertising/proximity-based-advertising-close r-than-you-think.html [extrait le 2016-08-09]

## Description

### 1. Domaine

La technique proposée se rapporte à la transmission de données à des utilisateurs par des commerçants. La technique proposée se rapporte plus spécifiquement à l'adaptation de la mise à disposition de produits ou de services en fonction de dispositifs spécifiques et de points de ventes autonomes La technique proposée se rapporte également à la transmission, à un utilisateur, par un commerçant, de données représentatives d'une information relative à un achat effectué par l'utilisateur auprès du commerçant.

### 2. Art Antérieur

La communication entre un commerçant et un utilisateur est un élément indispensable pour réaliser un achat. Le commerçant doit d'abord communiquer son offre (un produit matérialisé ou immatérialisé, et un prix). L'utilisateur donne son acception et effectue le paiement, par exemple en utilisant sa carte bancaire. Par la suite, le commerçant fournit un reçu sous forme d'un ticket qui indique le montant du paiement et le produit ou le service acheté. Ce reçu, d'une part, permet de confirmer le montant réellement facturé et de justifier l'achat, et d'autre part permet au commerçant de donner à l'utilisateur des informations sur le produit effectivement acheté.

Le reçu est un support d'informations qui se trouve être sous une forme papier. Les commerçants doivent être équipés d'une imprimante ou d'un terminal intégrant une imprimante pour imprimer ces reçus. L'achat et la maintenance des imprimantes ou des terminaux représente une charge supplémentaire pour les commerçants. En outre, l'utilisation massive de papiers pose un problème écologique.

Parallèlement, les modes de ventes de produits ou de services évoluent et permettent à des utilisateurs de réaliser des achats de manière simplifiée. Ces modes de ventes ont des points communs :
- rapidité de choix de produit et de paiement ciblant l'achat impulsif ;
- capacité à effectuer des transactions avec des forts pics d'utilisation ;
- point de vente réduit au maximum pour être déployé rapidement et dans des environnements hétérogènes ;
- point de vente réduisant le coût global de possession (TCO) ;

Pour couvrir l'ensemble de ces points de vente, il est possible d'intégrer du paiement dans un écran numérique : ceci est par exemple le cas des écrans publicitaires numérique qui se trouvent de plus en plus souvent installés dans des centres commerciaux, des gares, des aéroports, voire dans la rue. Une telle technique d'intégration permet d'afficher sur l'écran une publicité pour la promotion d'un produit. Un terminal de paiement autonome est intégré pour payer en sans contact, (NFC ou autre moyen de paiements électroniques sans contact) peut également être présent. Dans ces cas d'usage, il est notamment nécessaire de fournir un reçu (ticket) après chaque achat des utilisateurs. En effet, pour les achats des produits dématérialisés (par exemple, une séance de cinéma), il est nécessaire d'indiquer les informations qui permettent aux utilisateurs d'accéder aux produits (horaire, salle et place). Pour les achats des produits matérialisés, il est nécessaire d'indiquer des moyens permettant aux utilisateurs de récupérer les produits ou de fournir leurs adresses pour les expéditions des produits. Plus généralement, il est nécessaire de communiquer avec l'utilisateur.

Pour les questions de coûts, les écrans publicitaires équipés de moyens de paiement sont mis à disposition par une régie publicitaire. Cette régie publicitaire dispose de divers moyens de commercialisation de l'espace publicitaire qu'elle vend. En revanche à ce jour, la régie publicitaire ne dispose pas de moyens permettant d'augmenter l'efficacité de l'interaction menée avec l'utilisateur.

Il existe donc un besoin de fournir une solution qui permet de communiquer des informations aux utilisateurs avant, pendant et après les achats, qui réponde aux problèmes de complexité, de coût, de rapidité et de sécurité propres aux terminaux de paiement autonomes intégrés dans des bornes publicitaires interactives.

Un article à l'adresse Internet https://www.cnet.com/news/vending-machine-watches-you-offers-drink-advice/expose un distributeur automatique japonais employant une technologie de reconnaissance faciale pour estimer l'age d'un utilisateur et lui suggérer une boisson appropriée.

Le document de publication de demande de brevet JP 2011 203952 A par Hitachi Solutions Ltd. expose un distributeur automatique proposant des produits différents en fonction de certaines variables telles que par exemple l'âge et le sexe d'un utilisateur, l'horaire courant, la température etc.

Le document de publication de demande de brevet US 2013/0054016 A1 par J. Canter et al. expose un distributeur automatique offrant des services personnalisés en fonction d'un profil client maintenu pour chaque utilisateur.

Le document de publication de demande de brevet US 2011/0144801 A1 par E. Selker et al. expose un distributeur automatique employant des senseurs pour estimer un niveau d'attention d'un client et modifier de conséquence une présentation audiovisuelle.

### 3. Résumé

La technique proposée ne présente pas au moins certains des problèmes de l'art antérieur. Plus particulièrement, la technique proposée se rapporte à un procédé de traitement de données affichées sur un écran d'une borne multimédia comprenant un terminal de paiement sans contact, procédé mis en œuvre au sein de ladite borne multimédia, procédé caractérisé en ce qu'il comprend :
- une étape de détection, d'une présence d'un utilisateur ;
- une étape de modification, par un module de gestion d'interaction, d'un message publicitaire courant, diffusé par ladite borne multimédia, en un message publicitaire personnalisé.

Ainsi, la borne multimédia ne se contente pas d'être un simple outil de diffusion d'un message publicitaire, mais peut également se présenter un outil d'interaction avec l'utilisateur.

Ledit procédé comprend en outre au moins une étape de mise en œuvre d'une transaction de paiement, à l'aide du terminal de paiement sans contact, pour l'achat d'un produit ou un service postérieure à l'affichage du message publicitaire personnalisé audit utilisateur.

La mise en œuvre d'une transaction comprend :
- une étape de réception, par le module de gestion d'interaction, d'une donnée représentative d'une volonté d'un utilisateur de réaliser un achat en relation avec le message publicitaire personnalisé ;
- une étape de transmission, à un serveur de traitement, des données de création, d'un profil d'acceptance comprenant le numéro du terminal de paiement sans contact;
- une étape de réception, dudit profil d'acceptance créé par ledit serveur le profil d'acceptance comprenant un ensemble de données à destination du terminal de paiement sans contact pour permettre à celui-ci de réaliser une transaction de paiement et se présentant sous la forme d'un fichier chiffré;
- une étape de transmission dudit profil d'acceptance audit terminal de paiement sans contact ;
- une étape d'obtention, par le terminal de paiement sans contact, en provenance d'un moyen de paiement de l'utilisateur, de données nécessaires à la mise en œuvre d'un paiement ;
- une étape d'instanciation, par le terminal de paiement sans contact, d'une transaction, à l'aide desdites données et dudit profil d'acceptance.

Ainsi, la borne multimédia est à même de mettre en œuvre une opération de paiement, de manière directe, une fonction d'un message personnalisé, présenté à l'utilisateur. Dès lors, l'utilisateur peut réaliser des achats directement auprès de la borne multimédia.

Selon une caractéristique particulière, le procédé comprend la mise en œuvre, par le serveur de traitement de la transaction en coordination avec un serveur bancaire.

Ainsi, la transaction est gérée par un serveur de traitement. Dès lors, on augmente la sécurité de la transaction en se prémunissant d'un piratage de la borne multimédia.

Selon une caractéristique particulière, la mise en œuvre, par le serveur de traitement de la transaction en coordination avec un serveur bancaire comprend :
- une étape de réception, parle serveur de traitement, de la transaction ;
- une étape transmission, par le serveur de traitement, de la transaction à un serveur bancaire ;
- une étape de traitement, par le serveur bancaire de la transaction reçue ; et
- une étape de transmission, par le serveur bancaire, d'un déroulement de la transaction ;

Ainsi, la transaction de paiement du produit ou du service est mise en œuvre au sein d'un réseau de communication sécurisé.

Selon une caractéristique particulière, l'étape de modification d'un message publicitaire courant en un message publicitaire personnalisé comprend l'affichage d'un message d'invite, invitant l'utilisateur à acheter le bien ou le service dont il est fait la promotion.

Selon une caractéristique particulière, l'étape de modification d'un message publicitaire courant en un message publicitaire personnalisé comprend :
- une étape de détection d'une présence d'un terminal de communication intelligent ;
- une étape de transmission, au terminal de communication, d'une requête d'obtention de données ; et
lorsque l'utilisateur accepte la transmission de données :
- une étape de modification dudit message publicitaire en fonction d'au moins une valeur issue desdites données reçues.

Selon une caractéristique particulière, ladite étape de détection comprend une étape d'obtention d'un signal en provenance d'au moins un capteur de présence de la borne multimédia.

Selon une caractéristique particulière, la mise en œuvre d'une transaction comprend une étape d'affichage, sur l'écran de ladite borne multimédia, d'une donnée de matérialisation de l'achat réalisé par ledit utilisateur.

Selon une caractéristique particulière, postérieurement à l'étape d'd'obtention des données (DAT) nécessaires à la mise en œuvre du paiement, le procédé comprend :
- une étape d'instanciation d'une temporisation d'une durée prédéterminée ;
- une étape d'affichage d'un message informant de la possibilité d'annuler la transaction jusqu'à l'occurrence de l'un ou de l'autre des évènements suivants :
   - réception, par le terminal de paiement, en provenance d'un moyen de paiement de l'utilisateur, des mêmes données (DAT) que celles précédemment utilisées pour la mise en œuvre du paiement ;
   - écoulement du délai défini par la temporisation.

Ainsi, durant une période de temps prédéterminée, l'utilisateur a la possibilité d'annuler la transaction en utilisant les mêmes moyens de paiement que ceux qu'il a précédemment utilisé.

Selon une caractéristique particulière, lorsque le terminal de paiement reçoit les mêmes données (DAT) que celles précédemment utilisées pour la mise en œuvre du paiement, le procédé comprend une étape d'annulation de ladite transaction.

Selon un autre aspect, la présente technique se rapporte également à une borne multimédia comprenant des moyens d'affichage de données sur un écran et comprenant un terminal de paiement sans contact. Une telle borne comprend entre autre :
- des moyens de détection, d'une présence d'un utilisateur ;
- des moyens de modification, par un module de gestion d'interaction, d'un message publicitaire courant, diffusé par ladite borne multimédia, en un message publicitaire personnalisé. personnalisé;
- des moyens de mise en oeuvre d'une transaction de paiement, à l'aide du terminal de paiement sans contact, pour l'achat d'un produit ou un service postérieure à l'affichage du message publicitaire personnalisé audit utilisateur, lesdits moyens de mise en oeuvre d'une transaction comprenant:
   - des moyens de réception, par le module de gestion d'interaction, d'une donnée représentative d'une volonté d'un utilisateur de réaliser un achat en relation avec le message publicitaire personnalisé;
   - des moyens de transmission, à un serveur de traitement, des données de création, d'un profil d'acceptance comprenant le numéro du terminal de paiement sans contact;;
   - des moyens de réception, dudit profil d'acceptance créé par ledit serveur le profil d'acceptance comprenant uni ensemble de données à destination du terminal de paiement sans contact pour permettre à celui-ci de réaliser une transaction de paiement et se présentant sous la forme d'un fichier chiffré;
   - des moyens de transmission dudit profil d'acceptance audit terminal de paiement sans contact;
   - des moyens d'd'obtention, par le terminal de paiement sans contact, en provenance d'un moyen de paiement de l'utilisateur, de données nécessaires à la mise en oeuvre d'un paiement;
   - des moyens d'instanciation, par le terminal de paiement sans contact, d'une transaction à l'aide desdites données et dudit profil d'acceptance.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est un diagramme de séquence du procédé de traitement de données ;
- la figure 2 est une représentation simplifiée d'une borne multimédia selon la présente technique.

### 5. Description

### 5.1. Principe général

Dans l'état de la technique, il est complexe et coûteux pour une entité de gestion de ressources publicitaires (telle qu'une régie publicitaire) de mettre en œuvre une interaction avec un client final (appelé utilisateur). En effet, les entités de gestion de ressources publicitaires sont généralement en contact avec des annonceurs (commerçants) qui souhaitent faire la promotion de produits et de services et ne sont pas en relation directe avec des utilisateurs finaux.

Le principe général de la technique proposée consiste à permettre une interaction entre des utilisateurs finaux et un commerçant par l'intermédiaire d'une entité de gestion de ressources publicitaire. Pour ce faire, l'entité de gestion de ressources publicitaires se dote d'une borne conforme à la présente technique, et décrite ci-après. Plus spécifiquement, une telle borne peut également être appelée borne multimédia de paiement ou borne multimédia de promotion. Elle comprend un écran, qui peut être un écran tactile. La borne comprend également un terminal de paiement (par exemple autonome), de type terminal de paiement sans contact. Une telle borne comprend également un processeur, une mémoire vive et une mémoire de stockage et une interface de communication réseau (de type filaire). De plus, en fonction de modes de réalisation, une telle borne comprend également un ou plusieurs modules de connexion sans fil (bluetooth, direct wifi). Dans le cadre de la présente on fait une différence entre une interface de communication sans fil, permettant d'interagir avec un matériel à disposition de l'utilisateur (par exemple un terminal de communication intelligent de type smartphone) et une interface sans contact (de type NFC) permettant de transmettre et recevoir des données en provenance de moyens de paiement (par exemple carte bancaire sans contact). Ces deux types d'interfaces ne doivent pas et ne peuvent pas être confondues.

Selon la présente technique, une telle borne multimédia, comprend également un module de gestion d'interaction. Un tel module de gestion d'interaction, qui peut être un module matériel ou logiciel est en charge de l'adaptation du fonctionnement de la borne multimédia en fonction de valeurs spécifiques qui sont notamment liées :
- au type de message publicitaire affiché par la borne multimédia ;
- aux signaux issus d'un capteur de proximité ou de présence, un tel capteur étant en mesure de déterminer la présence ou l'absence d'une personne devant la borne multimédia ; en fonction de la technologie de détection utilisée pour ce capteur, il est également possible de déterminer le nombre de personnes présentes devant l'écran ;
D'une manière générale, une telle borne multimédia est ainsi en mesure d'adapter son fonctionnement par rapport :
- au lieu d'installation de la borne (gare, station de métro, aéroport, centre commercial, point de vente) ;
- à l'heure de la journée ; par exemple, lors des heures de très forte affluence dans une gare ou une station de métro (à l'endroit où la borne est installée), le fonctionnement de la borne peut être limité à un simple affichage dynamique (car il y a peu de chance qu'un utilisateur soit intéressé par l'achat d'un produit ou service) ; à l'inverse lors des heures creuses, la borne peut adapter son fonctionnement pour permettre l'achat de bien ou de services ;
- de données externes publiques (météo, trafic, événements...) : par exemple, lorsque la borne reçoit une information relative à une forte chaleur, les messages publicitaires se rapportant à la vente de produits destinés à un temps de pluie peuvent être omis ;
- le type d'interaction de l'utilisateur (carte de paiement, carte de fidélité, smartphone...) : la borne est en mesure, grâce aux modules de connexion sans fils, de détecter une présence d'un terminal de communication intelligent s'il existe : sil un tel terminal est présent devant la borne, alors celle-ci peut adapter son fonctionnement pour prendre en compte la présence du terminal ;
- d'éventuelles données stockées et accessibles dans le dans le terminal de communication de l'utilisateur en utilisant un protocole d'échange de données courte distance (NFC, BLE...) : par exemple, si un message publicitaire identique ou similaire à un message publicitaire affichable par la borne est détecté (dans la cache publicitaire du terminal intelligent ou encore par l'obtention des cookies du terminal intelligent), la borne peut afficher le message identique qu'elle possède elle-même afin de relayer celui du terminal de l'utilisateur ;
- du nombre de personnes se tenant devant la borne multimédia ;
- des transactions éventuellement effectuées précédemment : la borne peut être dotée d'une mémoire spécifique (i.e. des données privées) des produits achetés et par exemple proposer plus souvent les produits ou services les plus vendus ou afficher le nombre de places restantes pour un spectacle ;
- la liste des produits/prix proposés peut être mise à jour soit de manière régulière et automatique (pull) soit en recevant mise à jour (push) par exemple en émettant une requête spécifique à destination d'un serveur de traitement auquel la borne est connecté par l'intermédiaire de son interface réseau.

La présente technique se rapporte également à un serveur de traitement, de type serveur de prestataire de services de paiements. Un tel serveur de traitement est mis en œuvre pour d'une part traiter les requêtes en provenance de la borne multimédia. De telles requêtes sont divisées en deux catégories distinctes : il s'agit d'une part de requête de mise à jour. Ces requêtes de mise à jour sont utilisées pour réaliser des mises à jour distantes de la borne interactive. En fonction des modes de réalisation et des conditions opérationnelles, ces requêtes de mise à jour sont soit directement traitées par le serveur de traitement (auquel cas le serveur de traitement possède ou peut acquérir les données nécessaires à la mise à jour de la borne interactive) soit indirectement en transmettant cette requête à un serveur d'une régie publicitaire en charge de réaliser les mises à jour de la borne multimédia.

Ces deux modes de réalisation diffèrent essentiellement par l'architecture du réseau connectant les bornes publicitaires. L'avantage de n'avoir qu'un seul serveur de traitement auprès duquel la borne publicitaire obtient des données réside dans la plus grande sécurisation du système : en n'ayant qu'un seul serveur avec lequel échanger des données, un protocole d'échange spécifique peut être mis en œuvre, comprenant par exemple un chiffrement permanent des données échangées. L'avantage d'avoir un serveur de traitement et un serveur de régie réside dans la plus grande souplesse de mise à jour des offres de la régie. La régie n'est pas tributaire du serveur de traitement pour effectuer la mise à jour. Cela oblige cependant à disposer d'une borne multimédia qui ait la capacité de traiter à la fois des échanges avec le serveur de traitement et à la fois des échanges avec le serveur de régie, ce qui peut poser des problèmes de sécurité. Ainsi, la technique proposée, qui consiste à disposer d'un serveur de traitement qui effectue le relai avec le serveur de régie permet d'apporte une solution à ce problème. Le serveur de traitement reste seul en interface avec le serveur de régie tandis que le serveur de régie est à même de fournir des données au serveur de traitement pour que celui-ci les transmette à la borne multimédia.

Bien entendu, cette architecture est celle qui semble être la plus sécurisée. Il est cependant possible que le terminal de paiement sans contact de la borne multimédia soit directement en relation avec le serveur de traitement. On rappelle qu'un tel terminal de paiement sans contact possède ses propres ressources (i.e. processeur sécurisée, mémoire sécurisée, interfaces sécurisées) et ses propres dispositifs de sécurité (i.e. anti infraction, détection d'intrusion). Dès lors, il est possible et envisagé, dans un autre mode de réalisation, que la borne multimédia sollicite le terminal de paiement sans contact uniquement lors des opérations de paiement. Dès lors, il n'est pas spécifiquement nécessaire, dans ce cas, de centraliser la gestion des mises à jour au niveau du serveur de traitement. Le terminal de paiement, inséré au sein de la borne multimédia agit dès lors sur instructions d'un module spécifique de celle-ci.

En fonction des données reçues de la part du serveur de régie ou en fonction des données pré-chargées dans la borne multimédia, celle-ci est dès lors en mesure de mettre en œuvre différents scénarios d'interaction. Le premier scénario, le plus simple consiste en une diffusion permanente d'un unique message publicitaire et, lorsque les conditions sont réunies, l'offre d'une possibilité de vente du produit ou du service dont il est fait la promotion. Les conditions susceptibles de provoquer la vente sont les suivantes : un utilisateur est détecté devant la borne multimédia et cet utilisateur possède un moyen de paiement sans contact pouvant servir au règlement de son achat.

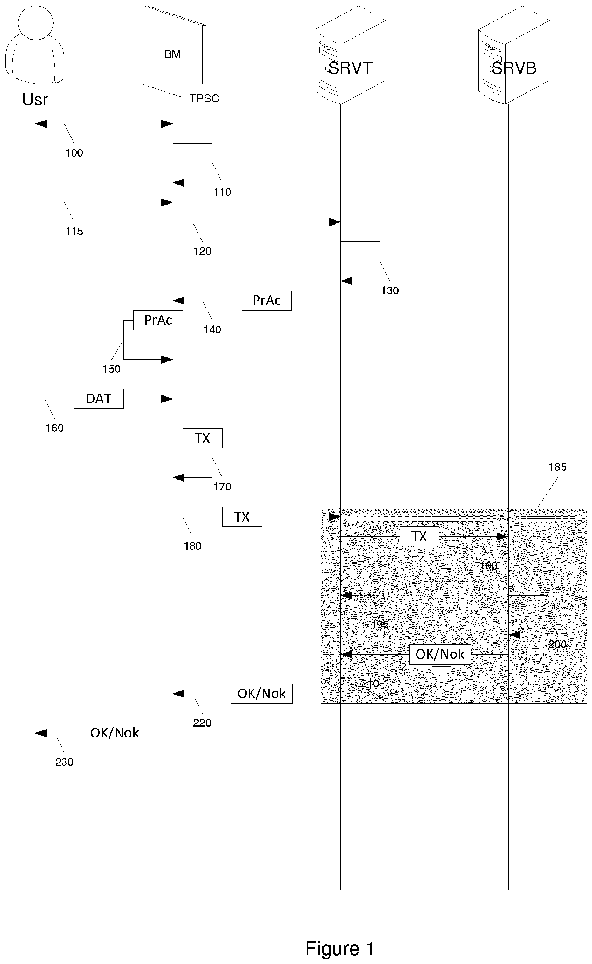

Ce premier scénario permet d'illustrer, en relation avec la figure 1, les échanges mis en œuvre pour réaliser cet achat :
- un utilisateur est stationné devant la borne multimédia ;
- la borne multimédia (BM) détecte (100) la présence de l'utilisateur; cette étape de détection est par exemple réalisée à l'aide d'un signal issu d'un capteur, comme par exemple un capteur infrarouge ou un capteur ultrasonore ou encore une combinaison de signaux issus de ces deux capteurs ;
- la borne multimédia (BM), par l'intermédiaire de son module de gestion d'interaction (ModGI), effectue une modification (110) de l'affichage du message publicitaire courant en un message publicitaire personnalisé ; une telle modification peut consister en l'affichage d'un message d'invite, invitant l'utilisateur à acheter le bien ou le service dont il est fait la promotion : un message de type « souhaitez-vous acheter XXX » apparaît alors à l'écran et le logo du mode de paiement sans contact peut s'illuminer, de manière préventive ; avantageusement, le message d'invite est positionné au niveau du regard de l'utilisateur; une telle modification peut également tenir compte d'autres aspects tels que: la détection de la présence d'un terminal de communication intelligent, l'heure de la journée, la météo, etc.

L'utilisateur peut alors décider (115) (ou non) d'acheter le bien et le service en question. S'il décide d'acheter, il doit se servir de son moyen de paiement sans contact (i.e. carte bancaire ou terminal de communication intelligent) et l'apposer au niveau du logo de paiement sans contact. Alternativement, l'utilisateur peut également accepter l'offre en sélectionnant un bouton « Oui » (qui est affiché sur l'écran en même temps que le message précédent). S'il effectue l'une de ces opérations, il est mis en œuvre une transaction de paiement, à l'aide du terminal de paiement sans contact, pour l'achat d'un produit ou un service postérieure à l'affichage du message publicitaire personnalisé audit utilisateur. Les actions suivantes sont alors mises en œuvre:
- la borne multimédia (BM) (ou le terminal de paiement sans contact TPSC), transmet (120) au serveur de traitement, les données nécessaires à la création, par celui-ci, d'un profil d'acceptance (PrAc) ; le profil d'acceptance est un ensemble de données à destination du terminal de paiement en vue de permettre à celui-ci de réaliser une transaction de paiement ; les données transmises pour créer ce profil d'acceptance sont par exemple le prix, un identifiant du commerçant (par exemple un identifiant bancaire), un identifiant de produit, le numéro du terminal de paiement ; il se présente sous la forme d'un fichier chiffré qui évite que les données puisse être accessibles ;
- le serveur de traitement (SRVT) créé (130) le profil d'acceptance (PrAc) et le transmet (140) à la borne multimédia (BM)
- la borne multimédia réceptionne (150) ce profil d'acceptance (PrAc) et le transmet au terminal de paiement sans contact (TPSC) ;
- concomitamment ou postérieurement, la borne multimédia (BM) (ou le terminal de paiement sans contact TPSC), obtient (160) les données (DAT) nécessaires en provenance du moyen de paiement (par exemple nom, numéro de carte bancaire, date d'expiration, cryptogramme) de manière cryptée ;
- le terminal de paiement sans contact (TPSC) effectue (170) alors la transaction et la transmet (180) au serveur de traitement (SRVT);

Il s'en suit la mise en œuvre de la transaction, de manière sécurisée, entre le serveur de traitement et le serveur bancaire. Une telle mise en œuvre comprend :
- le serveur de traitement (SRVT) transmet (190) la transaction à un serveur d'un établissement bancaire (SRVB) (i.e. le serveur de l'établissement bancaire du commerçant) ; de manière complémentaire, le serveur de traitement (SRVT) journalise (195) la transaction (i.e. par exemple à des fins de comptabilisation, à des fins de preuve ou à des fins de perception de commission ou de rétribution) ;
- le serveur de l'établissement bancaire (SRVB) traite (200) la transaction reçue et informe (210) le serveur de traitement (SRVT) du déroulement de celle-ci (acceptation ou rejet de la transaction) ;
- le serveur de traitement (SRVT) informe (220) la borne multimédia de la réalisation de la transaction (acceptation ou rejet de la transaction) ;
- la borne multimédia informe (230) à son tour l'utilisateur.

Ainsi, la borne multimédia interagit avec l'utilisateur de manière simple et efficace. Bien entendu, la méthode présentée est une méthode permettant une interaction basique (i.e. acheter le produit présenté). Cependant, le module de gestion d'interaction (ModGI) permet de gérer des interactions plus complexes que celle qui vient d'être présentée. Plus particulièrement, le module de gestion d'interaction offre la possibilité d'effectuer :
- la promotion et la vente d'une multitude de produits différents au cours de la journée, en fonction notamment des heures de la journée, du nombre de passage devant la borne, etc.
- la promotion et la vente de produits de commerçants différents au cours de la journée : une telle possibilité est particulièrement intéressante pour une régie publicitaire, qui pour une même borne multimédia peut proposer des biens et des services différents au cours de la journée ; une telle possibilité est également intéressante pour un centre commercial, propriétaire d'une borne multimédia, qui peut promouvoir de manière différentes les produits et services des commerces du centre commercial ;
- la promotion et la vente de produit en adéquation avec le consommateur utilisant le dispositif: lorsque l'utilisateur a débuté son interaction avec la borne multimédia, cette dernière, par l'intermédiaire du le module de gestion d'interaction (ModGI), peut entrer dans un mode d'interaction de type question/réponse dont l'objectif est d'affiner les choix de l'utilisateur ;
- la promotion et la vente de produit en promotion et/ou avec des quantités limitées pendant les soldes ou dans le cas d'un déstockage;
- la vente de produit lié au contexte géographique de la borne ; en effet si cette dernière est installée dans un stade ou dans un cinéma, les interactions peuvent changer en fonction des spectacles.

Le module de gestion de l'interaction est également en charge de la gestion de l'obtention du produit ou du service. À l'aide des moyens qui sont décrits par la suite, le module de gestion de l'interaction (et la borne multimédia) informe l'utilisateur de la bonne réalisation de la transaction de paiement. Il reste cependant une problématique à gérer : il s'agit de l'obtention, par l'utilisateur, du produit ou du service commandé. Cette obtention doit être prise en charge par le module de gestion d'interaction afin que l'utilisateur ne se sente pas démuni ou abandonné à la fin du processus et que cet achat soit déceptif. Plus sieurs cas de figure sont envisageables, selon d'une part que l'achat porte sur un produit ou un service et d'autre part que la borne multimédia soit installée dans un lieu public (hall d'aéroport, hall de gare, station de métro) ou qu'elle soit installée au sein d'une boutique.

Lorsque la vente concerne un service, donc par définition un ou plusieurs actes immatériels, le module de gestion d'interaction a pour mission de fournir à l'utilisateur le moyen de profiter du service acheté. En règle générale, cette mission peut être atteinte en obtenant des coordonnées de l'utilisateur (auquel cas ces modules permettant l'obtention de telles coordonnées sont mis en œuvre: comme par exemple des modules d'interfaçage avec le terminal de communication de l'utilisateur ou en dernier ressort, un clavier tactile apparaissant sur l'écran et permettant à l'utilisateur de saisir les données). Cette mission peut également être atteinte en fournissant, à l'utilisateur un reçu ou une preuve de son achat, afin qu'il puisse réclamer le bénéfice de la prestation de service. Dans ce cas, le module de gestion d'interaction affiche, par exemple dans un espace dédié de l'écran, une ou plusieurs données permettant à l'utilisateur de revendiquer la mise en œuvre du service (par exemple un code en deux dimensions, une image tatouée, comprenant un code caché). Cette image est capturée par le terminal de communication de l'utilisateur (par exemple par l'intermédiaire d'une prise de vue). L'image capturée fait office de preuve d'achat: cette image peut par la suite être décodée par un dispositif spécifique du commerçant (fournisseur de services) afin de permettre la mise en œuvre de ce service au bénéfice de l'utilisateur.

Lorsque la vente concerne un produit, donc par définition un ou plusieurs objets matériels, le module de gestion d'interaction a pour mission de fournir à l'utilisateur le moyen de récupérer ces objets. Deux catégories sont possibles : la livraison à l'utilisateur (par le biais d'un transporteur) ou le retrait en magasin.

Dans le cas de la livraison, la mission du module de gestion de l'interaction peut être atteinte en obtenant des coordonnées de l'utilisateur (auquel cas ces modules permettant l'obtention de telles coordonnées sont mis en œuvre : comme par exemple des modules d'interfaçage avec le terminal de communication de l'utilisateur ou en dernier ressort, un clavier tactile apparaissant sur l'écran et permettant à l'utilisateur de saisir les données).

Dans le cas du retrait en magasin, deux possibilités sont offertes :
- soit la borne multimédia est installée dans le magasin en question : l'utilisateur peut alors aller chercher le produit directement en rayon et sortir du magasin ;
- soit la borne multimédia est installée dans un lieu public : l'utilisateur se rend alors dans le magasin pour effectuer le retrait des articles achetés.

Quel que soit le cas, le module de gestion d'interaction affiche, par exemple dans un espace dédié de l'écran, une ou plusieurs données permettant à l'utilisateur de revendiquer la mise en œuvre du service (par exemple un code en deux dimensions, une image tatouée, comprenant un code caché). Cette image est capturée par le terminal de communication de l'utilisateur (par exemple par l'intermédiaire d'une prise de vue). L'image capturée fait office de preuve d'achat : cette image peut par la suite être décodée par un dispositif spécifique du commerçant (dans le magasin de retrait) afin de permettre le retrait des produits.

Entre l'étape d'obtention (160) les données (DAT) nécessaires en provenance du moyen de paiement et l'étape de mise en œuvre (170) de la transaction par le terminal de paiement, une étape optionnelle d'annulation de la transaction peut être mise ne œuvre. L'objectif est de permettre à un utilisateur d'annuler la commande qu'il vient de passer avant que le paiement ne soit effectuer. Concrètement, l'utilisateur présente son moyen de paiement devant la borne et cela permet l'obtention des données par le terminal de paiement (ou par la borne, en fonction des modes de réalisation). Une fois ces données obtenues, rien ne s'oppose à la mise en œuvre de la transaction. Or l'utilisateur peut s'être trompé dans l'achat qu'il s'apprête à réaliser, soit parce qu'il a utilisé un moyen de paiement inadéquat, soit parce qu'il ne souhaite finalement pas réaliser l'achat. Pour résoudre ce problème, on met en œuvre une étape de temporisation, étape durant laquelle l'utilisateur peut réutiliser son moyen de paiement pour annuler la transaction à réaliser. Plus particulièrement, une fois que l'utilisateur a utilisé son moyen de paiement pour effectuer le paiement, le module de gestion d'interaction active une temporisation (par exemple entre 5 et 10 secondes) et commande l'affichage d'un message d'annulation de la transaction sur la borne. Le message est affiché à l'endroit où l'utilisateur a précédemment apposé son moyen de paiement. Il indique la possibilité d'annuler la transaction et indique optionnellement, en temps réel, le temps restant pour pouvoir l'annuler. Durant ce temps, le terminal de paiement se met en position de recevoir ces données. Le terminal de paiement, par l'intermédiaire de l'antenne NFC, émet, un champ radio électrique. Si l'utilisateur appose à nouveau son moyen de paiement (pour annuler l'achat), le terminal de paiement obtient les données du moyen de paiement et les compare avec les données précédemment issues du moyen de paiement.

Lorsque les données sont identiques, la transaction est annulée (le profil d'acceptante est supprimé et le terminal de paiement supprime les données du moyen de paiement). Le module de gestion d'interaction commande alors l'affichage de l'offre qui était précédemment affichée (i.e. avant le début de la transaction).

Lorsque les données sont différentes, la transaction se poursuit : en effet, si les données obtenues pour annuler la transaction ne sont pas les mêmes que celles précédemment obtenues pour débuter la transaction, il est probable que ce n'est pas l'utilisateur qui tente d'annuler la transaction, mais une tierce personne. Dès lors, on suppose que l'utilisateur ne souhaite pas annuler la transaction.

### 5.2. Description d'une borne multimédia

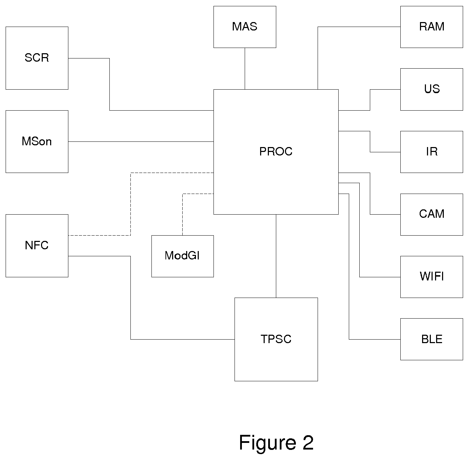

On présente, en relation avec la figure 2, l'architecture d'une borne multimédia selon la présente technique. Une telle borne multimédia (BM) comprend un écran (Scr), de préférence un écran tactile. Un tel écran dispose d'une taille suffisante pour pouvoir afficher, de manière visible par des passants, un ou plusieurs messages publicitaires. Ainsi, l'écran comprend typiquement une taille comprise entre 32 et 55 pouces de diagonale. Un message publicitaire typique affiché par un tel écran comprend par exemple une vidéo et/ou des photos et/ou du texte.

En fonction de l'environnement de destination de la borne multimédia (BM), cette dernière peut également comprendre un module de restitution sonore (MSon) : le module de restitution sonore est destiné à produire des sons qui peuvent accompagner les messages publicitaires émis, lorsque de tels sons peuvent être perçus par les utilisateurs.

L'écran (Scr) et le module de restitution sonore (s'il est présent) sont connectés par un ou deux bus de transport de données à un processeur (Proc) de traitement. Un tel processeur (Proc) comprend suffisamment de capacités de traitement pour effectuer diverses tâches de traitement multimédia, comme par exemple l'affichage d'une vidéo de qualité et/ou l'affichage d'images de résolution supérieure. Le processeur (Proc) est en outre en mesure de recevoir des données par l'intermédiaire de bus de transport de données reliant le processeur (Proc) au module NFC (si celui-ci n'est pas directement géré par le terminal de paiement intégré) ou encore aux modules de communication sans fil (comme par exemple le module WiFi ou le module Bluetooth, BLE).

Le processeur (Proc) est par ailleurs relié, par l'intermédiaire d'un bus de données, aux capteurs (ultrasonore US, infrarouge IR ou encore à une caméra CAM) pour recevoir des signaux émis par ces capteurs afin de détecter la présence d'un ou plusieurs utilisateurs. Ces signaux sont transformés par le processeur et fournis au module de gestion d'interaction (ModGI). Le processeur comprend également une mémoire vive (RAM) et une mémoire de stockage (MAS).

Le processeur (Proc) est, en fonction des modes de réalisation, soit piloté par le module de gestion d'interaction (ModGI) sous forme logicielle (le module de gestion d'interaction est alors un module logiciel sous contrôle d'un système d'exploitation), soit connecté au module de gestion d'interaction (ModGI) sous forme matérielle. Le module de gestion d'interaction (ModGI) est en charge de la réception des données fournies par le processeur pour détecter la présence d'un ou plusieurs utilisateurs, obtenir des données relatives à un produit ou à un service à proposer, transmettre ces données au terminal de paiement sans contact, etc.

Tout au long du processus d'achat, le module de gestion d'interaction est également en mesure d'informer l'utilisateur de la progression de celui-ci, par exemple en affichant des données personnalisées.

En fonction des modes de réalisation, le module de gestion de l'interaction est également en mesure d'interagir avec l'utilisateur par l'intermédiaire d'un terminal de communication intelligent. Pour ce faire, le module de gestion d'interaction transmet, par l'intermédiaire de l'interface bluetooth, une balise (beacon). Cette balise peut être captée par le terminal de communication. A réception de cette balise, le terminal de communication est en mesure d'établir une communication bidirectionnelle avec la borne multimédia. Si l'utilisateur l'accepte (accepte l'interaction avec la borne multimédia), celle-ci peut alors lancer une recherche, par exemple dans la mémoire cache du terminal de communication. Cette recherche a pour objectif notamment d'obtenir une information sur les messages publicitaires déjà rencontrées par l'utilisateur, d'obtenir une information sur les applications installées. À l'aide de ces informations, le module de gestion d'interaction est en mesure par exemple d'identifier une application de fidélité en lien avec une marque concernée par un message publicitaire susceptible d'intéresser l'utilisateur. Il peut s'agir d'une marque concurrente ou de la même marque de produit et de service. Ainsi, avec l'aide d'une base de données, enregistrée dans la mémoire de masse de la borne, le module peut proposer l'achat d'un produit ou d'un service spécifique,

À l'aide des données obtenues dans le terminal de communication, le module de gestion d'interaction est en mesure d'obtenir des coordonnées de l'utilisateur (adresse de courrier électronique, adresse physique) ou du terminal (IMSI, IMEI) afin que l'utilisateur puisse prendre possession ou recevoir les produits ou services achetés, comme cela a été décrit précédemment.

À l'aide des données obtenues dans le terminal de communication, le module de gestion d'interaction est enfin en mesure de construire une preuve d'achat (QR code, image tatouée, telle qu'exposée précédemment) qui intègre un identifiant du terminal de communication. Dès lors, la sécurité de la transaction est améliorée, tant du point de vue de l'utilisateur (qui est sûr que son achat est lié à son terminal de communication) que du point de vue du commerçant (qui peut s'assurer disposer d'une preuve supplémentaire de la validité de l'achat réalisé par l'utilisateur.

## Revendications

1. Procédé de traitement de données affichées sur un écran d'une borne multimédia comprenant un terminal de paiement sans contact (TPSC), procédé mis en œuvre au sein de ladite borne multimédia (BM), procédé comprenant :
- une étape de détection, (100) d'une présence d'un utilisateur ;
- une étape de modification (110), par un module de gestion d'interaction (ModGI), d'un message publicitaire courant, diffusé par ladite borne multimédia, en un message publicitaire personnalisé ;
- au moins une étape de mise en œuvre d'une transaction de paiement, à l'aide du terminal de paiement sans contact, pour l'achat d'un produit ou un service postérieure à l'affichage du message publicitaire personnalisé audit utilisateur,
où a mise en œuvre d'une transaction comprend :
- une étape de réception (115), par le module de gestion d'interaction (ModGI), d'une donnée représentative d'une volonté d'un utilisateur de réaliser un achat en relation avec le message publicitaire personnalisé ;
- une étape de transmission (120), à un serveur de traitement (SRVT), des données de création d'un profil d'acceptance (PrAc), comprenant le numéro du terminal de paiement sans contact (TPSC) ;
- une étape de réception (140), dudit profil d'acceptance (PrAc), créé par ledit serveur (SRVT), le profil d'acceptance comprenant un ensemble de données à destination du terminal de paiement sans contact (TPSC) pour permettre à celui-ci de réaliser une transaction de paiement et se présentant sous la forme d'un fichier chiffré ;
- une étape de transmission (150) dudit profil d'acceptance (PrAc) audit terminal de paiement sans contact (TPSC) ;
- une étape d'd'obtention (160), par le terminal de paiement sans contact (TPSC), en provenance d'un moyen de paiement de l'utilisateur, de données (DAT) nécessaires à la mise en œuvre d'un paiement ;
- une étape d'instanciation (170), par le terminal de paiement sans contact (TPSC), d'une transaction (TX), à l'aide desdites données (DAT) et dudit profil d'acceptance (PrAc).

2. Procédé, selon la revendication 1, comprenant a mise en œuvre (185), par le serveur de traitement (SRVT) de la transaction (TX) en coordination avec un serveur bancaire (SRVB).

3. Procédé selon la revendication 2, où a mise en œuvre (185), par le serveur de traitement (SRVT) de la transaction (TX) en coordination avec un serveur bancaire (SRVB) comprend :
- une étape de réception (180), parle serveur de traitement (SRVT), de la transaction (TX) ;
- une étape transmission (190), par le serveur de traitement (SRVT), de la transaction à un serveur bancaire (SRVB) ;
- une étape de traitement (200), par le serveur bancaire (SRVB) de la transaction reçue ; et
- une étape de transmission (210), par le serveur bancaire (SRVB), d'un déroulement de la transaction ;

4. Procédé, selon la revendication 1, où l'étape de modification (110) d'un message publicitaire courant en un message publicitaire personnalisé comprend l'affichage d'un message d'invite, invitant l'utilisateur à acheter le bien ou le service dont il est fait la promotion.

5. Procédé, selon la revendication 1, où l'étape de modification (110) d'un message publicitaire courant en un message publicitaire personnalisé comprend :
- une étape de détection d'une présence d'un terminal de communication intelligent ;
- une étape de transmission, au terminal de communication, d'une requête d'obtention de données ; et
lorsque l'utilisateur accepte la transmission de données :
- une étape de modification dudit message publicitaire en fonction d'au moins une valeur issue desdites données reçues.

6. Procédé selon la revendication 1, où adite étape de détection (100) comprend une étape d'obtention d'un signal en provenance d'au moins un capteur (IR, US, CAM) de présence de la borne multimédia.

7. Procédé selon la revendication 1, où a mise en œuvre d'une transaction comprend une étape d'affichage, sur l'écran de ladite borne multimédia, d'une donnée de matérialisation de l'achat réalisé par ledit utilisateur.

8. Procédé selon la revendication 1, où edit moyen de paiement de l'utilisateur est un terminal de communication intelligent.

9. Procédé selon la revendication 8, où 'étape d'obtention (160), par le terminal de paiement sans contact (TPSC), en provenance du terminal de communication intelligent, de données (DAT) nécessaires à la mise en œuvre d'un paiement, comprend au moins une étape appartenant au groupe comprenant :
- l'identification d'une application de fidélité installée sur ledit terminal de communication intelligent ;
- l'obtention de coordonnées de l'utilisateur ;
- l'obtention de données du terminal de communication intelligent (IMSI, IMEI);
- construction d'une preuve d'achat intégrant un identifiant du terminal de communication intelligent (IMSI, IMEI).

10. Borne multimédia comprenant :
- des moyens d'affichage de données sur un écran et comprenant un terminal de paiement sans contact (TPSC) ;
- des moyens de détection, (100) d'une présence d'un utilisateur ;
- des moyens de modification (110), par un module de gestion d'interaction (ModGI), d'un message publicitaire courant, diffusé par ladite borne multimédia, en un message publicitaire personnalisé ;
- des moyens de mise en œuvre d'une transaction de paiement, à l'aide du terminal de paiement sans contact, pour l'achat d'un produit ou un service postérieure à l'affichage du message publicitaire personnalisé audit utilisateur,
où esdits moyens de mise en œuvre d'une transaction comprennent :
- des moyens de réception (115), par le module de gestion d'interaction (ModGI), d'une donnée représentative d'une volonté d'un utilisateur de réaliser un achat en relation avec le message publicitaire personnalisé ;
- des moyens de transmission (120), à un serveur de traitement, des données de création, d'un profil d'acceptance (PrAc), comprenant le numéro du terminal de paiement sans contact (TPSC) ;
- des moyens de réception (140), dudit profil d'acceptance (PrAc), créé par ledit serveur (SRVT), le profil d'acceptance comprenant un ensemble de données à destination du terminal de paiement sans contact (TPSC) pour permettre à celui-ci de réaliser une transaction de paiement et se présentant sous la forme d'un fichier chiffré ;
- des moyens de transmission (150) dudit profil d'acceptance (PrAc) audit terminal de paiement sans contact (TPSC) ;
- des moyens d'obtention (160), par le terminal de paiement sans contact (TPSC), en provenance d'un moyen de paiement de l'utilisateur, de données (DAT) nécessaires à la mise en œuvre d'un paiement ;
- des moyens d'instanciation (170), par le terminal de paiement sans contact (TPSC), d'une transaction (TX), à l'aide desdites données (DAT) et dudit profil d'acceptance (PrAc).

11. Produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé de traitement selon la revendication 1 à 9, lorsqu'il est exécuté par un processeur.

## Patentansprüche

1. Verfahren zum Verarbeiten von Daten, die auf einem Bildschirm eines Multimedia-Terminals angezeigt werden, umfassend ein kontaktloses Zahlungsterminal (TPSC), Verfahren, das in dem Multimedia-Terminal (BM) umgesetzt wird, Verfahren umfassend:
- einen Schritt des Erkennens (100) einer Anwesenheit eines Benutzers,
- einen Schritt des Änderns (110) durch ein Modul zur Verwaltung von Interaktionen (ModGI) einer aktuellen Werbebotschaft, die von dem Multimedia-Terminal gesendet wird, in eine personalisierte Werbebotschaft,
- mindestens einen Schritt des Umsetzens einer Zahlungstransaktion mit Hilfe von dem kontaktlosen Zahlungsterminal für den Kauf eines Produkts oder einer Dienstleistung nach dem Anzeigen der personalisierten Werbebotschaft für den Benutzer, wobei das Umzusetzen einer Transaktion aufweist:
- einen Schritt des Empfangens (115) durch das Modul zur Verwaltung von Interaktionen (ModGI) einer Dateneinheit, die für einen Willen eines Benutzers repräsentativ ist, einen Kauf im Zusammenhang mit der personalisierten Werbebotschaft zu tätigen,
- einen Schritt des Sendens (120) der Daten zum Erstellen eines Akzeptanzprofils (PrAc) an einen Verarbeitungsserver (SRVT), umfassend die Nummer des kontaktlosen Zahlungsterminals (TPSC),
- einen Schritt des Empfangens (140) des Akzeptanzprofils (PrAc), das von dem Server (SRVT) erstellt wird, wobei das Akzeptanzprofil einen Datensatz aufweist, der für das kontaktlose Zahlungsterminal (TPSC) bestimmt ist, um diesem zu ermöglichen, eine Zahlungstransaktion durchzuführen, und der die Form einer verschlüsselten Datei aufweist,
- einen Schritt des Sendens (150) des Akzeptanzprofils (PrAc) an das kontaktlose Zahlungsterminal (TPSC),
- einen Schritt des Erhaltens (160) durch das kontaktlose Zahlungsterminal (TPSC) von einem Zahlungsmittel des Benutzers von Daten (DAT), die für das Umsetzen einer Zahlung notwendig sind,
- einen Schritt des Instanziierens (170) einer Transaktion (TX) durch das kontaktlose Zahlungsterminal (TPSC) mit Hilfe von den Daten (DAT) und dem Akzeptanzprofil (PrAc).

2. Verfahren nach Anspruch 1, umfassend das Umsetzen (185) der Transaktion (TX) durch den Verarbeitungsserver (SRVT) in Koordination mit einem Bankserver (SRVB).

3. Verfahren nach Anspruch 2, wobei das Umsetzen (185) der Transaktion (TX) durch den Verarbeitungsserver (SRVT) in Koordination mit einem Bankserver (SRVB) aufweist:
- einen Schritt des Empfangens (180) der Transaktion (TX) durch den Verarbeitungsserver (SRVT),
- einen Schritt des Sendens (190) der Transaktion durch den Verarbeitungsserver (SRVT) an einen Bankserver (SRVB),
- einen Schritt des Verarbeitens (200) der empfangenen Transaktion durch den Bankserver (SRVB) und
- einen Schritt des Sendens (210) eines Ablaufs der Transaktion durch den Bankserver (SRVB).

4. Verfahren nach Anspruch 1, wobei der Schritt des Änderns (110) einer aktuellen Werbebotschaft in eine personalisierte Werbebotschaft das Anzeigen von einer Aufforderungsnachricht aufweist, die den Benutzer auffordert, die Ware oder die Dienstleistung zu kaufen, die beworben wird.

5. Verfahren nach Anspruch 1, wobei der Schritt des Änderns (110) einer aktuellen Werbebotschaft in eine personalisierte Werbebotschaft aufweist:
- einen Schritt des Erkennens einer Anwesenheit eines intelligenten Kommunikationsterminals,
- einen Schritt des Sendens einer Anfrage zum Erhalten von Daten an das Kommunikationsterminal und,
wenn der Benutzer der Datenübertragung zustimmt:
- einen Schritt des Änderns der Werbebotschaft in Abhängigkeit von mindestens einem Wert, der aus den empfangenen Daten hervorgegangen ist.

6. Verfahren nach Anspruch 1, wobei der Schritt des Erkennens (100) einen Schritt des Erhaltens eines Signals von mindestens einem Anwesenheitssensor (IR, US, CAM) des Multimedia-Terminals aufweist.

7. Verfahren nach Anspruch 1, wobei das Umsetzen von einer Transaktion einen Schritt des Anzeigens auf dem Bildschirm des Multimedia-Terminals von einer Dateneinheit der Umsetzung des durch den Benutzer getätigten Kaufs aufweist.

8. Verfahren nach Anspruch 1, wobei das Zahlungsmittel des Benutzers ein intelligentes Kommunikationsterminal ist.

9. Verfahren nach Anspruch 8, wobei der Schritt des Erhaltens (160) durch das kontaktlose Zahlungsterminal (TPSC) von dem intelligenten Kommunikationsterminal von Daten (DAT), die für das Umsetzen einer Zahlung notwendig sind, mindestens einen Schritt aufweist, der zu der Gruppe gehört, umfassend:
- das Identifizieren von einer Loyalitätsanwendung die auf dem intelligenten Kommunikationsterminal installiert wird,
- das Erhalten von Koordinaten des Benutzers,
- das Erhalten von Daten des intelligenten Kommunikationsterminals (IMSI, IMEI),
- das Erstellen eines Kaufnachweises, in dem eine Kennung des intelligenten Kommunikationsterminals (IMSI, IMEI) enthalten ist.

10. Multimedia-Terminal, umfassend:
- Mittel zum Anzeigen von Daten auf einem Bildschirm und umfassend ein kontaktloses Zahlungsterminal (TPSC),
- Mittel zum Erkennen (100) einer Anwesenheit eines Benutzers,
- Mittel zum Ändern (110) durch ein Modul zur Verwaltung von Interaktionen (ModGI) einer aktuellen Werbebotschaft, die von dem Multimedia-Terminal gesendet wird, in eine personalisierte Werbebotschaft,
- Mittel zum Umsetzen einer Zahlungstransaktion mit Hilfe von dem kontaktlosen Zahlungsterminal für den Kauf eines Produkts oder einer Dienstleistung nach dem Anzeigen der personalisierten Werbebotschaft für den Benutzer,
wobei die Mittel zum Umsetzen von einer Transaktion aufweisen:
- Mittel zum Empfangen (115) durch das Modul zur Verwaltung von Interaktionen (ModGI) einer Dateneinheit, die für einen Willen eines Benutzers repräsentativ ist, einen Kauf im Zusammenhang mit der personalisierten Werbebotschaft zu tätigen,
- Mittel zum Senden (120) der Daten zum Erstellen eines Akzeptanzprofils (PrAc) an einen Verarbeitungsserver, umfassend die Nummer des kontaktlosen Zahlungsterminals (TPSC),
- Mittel zum Empfangen (140) des Akzeptanzprofils (PrAc), das von dem Server (SRVT) erstellt wird, wobei das Akzeptanzprofil einen Datensatz aufweist, der für das kontaktlose Zahlungsterminal (TPSC) bestimmt ist, um diesem zu ermöglichen, eine Zahlungstransaktion durchzuführen, und der die Form einer verschlüsselten Datei aufweist,
- Mittel zum Senden (150) des Akzeptanzprofils (PrAc) an das kontaktlose Zahlungsterminal (TPSC),
- Mittel zum Erhalten (160) durch das kontaktlose Zahlungsterminal (TPSC) von einem Zahlungsmittel des Benutzers von Daten (DAT), die für das Umsetzen einer Zahlung notwendig sind,
- Mittel zum Instanziieren (170) einer Transaktion (TX) durch das kontaktlose Zahlungsterminal (TPSC) mit Hilfe von den Daten (DAT) und dem Akzeptanzprofil (PrAc).

11. Computerprogrammprodukt, das von einem Kommunikationsnetz heruntergeladen werden kann und/oder auf einem computerlesbaren Medium gespeichert ist und/oder von einem Mikroprozessor ausgeführt werden kann, umfassend Programmcodeanweisungen zum Ausführen eines Verarbeitungsverfahrens nach Anspruch 1 bis 9, wenn es von einem Prozessor ausgeführt wird.

## Claims

1. Method for processing data displayed on a screen of a multimedia kiosk comprising a contactless payment terminal (TPSC), said method being implemented within said multimedia kiosk (BM), method comprising :
- a step for detecting (100) a presence of a user;
- a step of modification (110), by means of an interactive management module (ModGI), of a common advertisement message, broadcast by said multimedia kiosk, into a personalized advertisement message;
- at least one step for implementing a payment transaction by means of the contactless payment terminal for the purchase of a product or a service subsequently to the display of the personalized advertisement message to said user;
implementing of a transaction comprising:
- a step of reception (115), by the interaction management module (ModGI), of a piece of data representing a user's willingness to make a purchase related to the personalized advertisement message;
- a step of transmission (120), to a processing server (SRVT), of data for creating an acceptance profile (PrAc), comprising the number of the contactless payment terminal;
- a step for receiving (140) said acceptance profile (PrAc), created by said server (SRVT), said acceptance profile (PrAc) comprising a dataset for said contactless payment terminal (TPSC) for allowing it implementing a payment transaction, the dataset being in a cyphered form;
- a step of transmission (150) of said acceptance profile (PrAc) to said contactless payment terminal (TPSC);
- a step for the obtaining (160), by the contactless payment terminal (TPSC) and coming from a payment means of the user, of data (DAT) necessary to make a payment;
- a step of instantiation (170) of a transaction (TX) by the contactless payment terminal (TPSC), with said data (DAT) and said acceptance profile (PrAc).

2. Method according to claim 1, comprising the implementation (185) of the transaction (TX) by the processing server (SRVT) in coordination with a bank server (SRVB).

3. Method according to claim 2, wherein the implementation (185) of the transaction (TX) by the processing server (SRVT) in coordination with a bank server (SRVB) comprises:
- a step of reception (180) of the transaction (TX) by the processing server (SRVT);
- a step of transmission (190) of the transaction by the processing server (SRVT) to a bank server (SRVB);
- a step of processing (200) of the received transaction by the bank server (SRVB); and
- a step of transmission (210) by the bank server (SRVB) of a progress of the transaction.

4. Method according to claim 1, wherein the step for modifying (110) a common advertisement message into a personalized advertisement message comprises the display of a prompt asking the user to purchase the item of goods or the services being promoted.

5. Method according to claim 1, wherein the step for modifying (110) a common advertisement message into a personalized advertisement message comprises:
- a step of detection of a presence of a smart communications terminal;
- a step of transmission of a request for obtaining data to the communications terminal; and
when the user accepts the transmission of data:
- a step of modification of said advertisement message as a function of at least one value derived from said received data.

6. Method according to claim 1, wherein said step of detection (100) comprises a step for obtaining a signal coming from at least one presence sensor (IR, US, CAM) of the multimedia kiosk.

7. Method according to claim 1, wherein the implementing of a transaction comprises a step of display, on the screen of said multimedia kiosk, of a piece of data expressing the purchase made by said user.

8. Method according to claim 1, wherein said user payment means is an intelligent communication terminal.

9. Method according to claim 8, wherein step of obtaining (160), by the contactless payment terminal (TPSC), from the intelligent communication terminal, of data (DAT) necessary to make a payment, includes at least one step belonging to the group comprising:
- identifying a loyalty application installed on said intelligent communication terminal;
- obtaining the user's contact details;
- obtaining data from the intelligent communication terminal (IMSI, IMEI);
- building of a proof of purchase incorporating an identifier of the intelligent communication terminal (IMSI, IMEI).

10. Multimedia kiosk comprising means for the display of data on a screen and comprising a contactless payment terminal (TPSC), **characterized in that** it comprises:
- means of detection (100) of a presence of a user;
- means of modification (110), by means of an interaction management module (ModGI), of a common advertisement message broadcast by said multimedia kiosk into a personalized advertisement message.
- Means for implementing a payment transaction by means of the contactless payment terminal for the purchase of a product or a service subsequently to the display of the personalized advertisement message to said user;
wherein means for implementing of a transaction comprise:
- means of reception (115), by the interaction management module (ModGI), of a piece of data representing a user's willingness to make a purchase related to the personalized advertisement message;
- means of transmission (120), to a processing server, of data for creating an acceptance profile (PrAc), comprising the number of the contactless payment terminal;
- means of receiving (140) said acceptance profile (PrAc), created by said server (SRVT), said acceptance profile (PrAc) comprising a dataset for said contactless payment terminal (TPSC) for allowing it implementing a payment transaction, the dataset being in a cyphered form;
- means of transmission (150) of said acceptance profile (PrAc) to said contactless payment terminal (TPSC);
- means of obtaining (160), by the contactless payment terminal (TPSC) and coming from a payment means of the user, of data (DAT) necessary to make a payment;
- means of instantiation (170) of a transaction (TX) by the contactless payment terminal (TPSC), with said data (DAT) and said acceptance profile (PrAc).

11. Computer program product downloadable from a communications network and/or stored on a computer-readable carrier and/or executable by a microprocessor, comprising program code instructions for executing a method of processing according to claims 1 to 9, when it is executed on a computer.
